# EUROPEAN PATENT APPLICATION

(11) **EP 4 723 066 A1**
(43) Date of publication of application: **08.04.2026**
(21) Application number: 25200753.9
(22) Date of filing: 08.09.2025
(51) Int. Cl.: G07C 5/08, G06V 20/56

(54) **IMAGE RECORDING DEVICE, VEHICLE, IMAGE RECORDING METHOD, AND PROGRAM**

(30) Priority: 04.10.2024 JP 2024174865
(71) Applicant: TOYOTA JIDOSHA KABUSHIKI KAISHA, Toyota-shi, Aichi-ken 471-8571 (JP)
(72) Inventor: SUZUKI, Yoshiki, Toyota-shi, 471-8571 (JP)
(74) Representative: J A Kemp LLP

(57) **Abstract**

An image recording device includes an approach recording unit configured to execute a parking approach recording function of recording an image of surroundings of a vehicle being parked when an object approaches a vicinity of the vehicle. The image recording device includes an acquisition unit configured to acquire surrounding environment information of the vehicle and a function control unit configured to turn off the parking approach recording function of the approach recording unit based on the acquired surrounding environment information.

## Description

### CROSS-REFERENCE TO RELATED APPLICATIONS

This application is based upon and claims the benefit of priority from Japanese Patent Application No. 2024-174865, filed on October 4, 2024, the entire contents of which are incorporated herein by reference.

### TECHNICAL FIELD

The present disclosure relates to an image recording device, a vehicle, an image recording method, and a program.

### BACKGROUND

For example, Japanese Unexamined Patent Publication No. 2018-200612 discloses a drive recorder having a function of monitoring (recording) the surroundings of a vehicle when the vehicle is parked. In order to suppress battery power consumption, this drive recorder stops monitoring in an area set in advance by a user as not requiring monitoring.

For example, even in the area set by the user as not requiring monitoring, the environment of the area may change. In this case, when monitoring is uniformly stopped while the vehicle is parked within the set area, monitoring may be insufficient.

### SUMMARY

Therefore, the present disclosure describes an image recording device, a vehicle, an image recording method, and a program capable of recording an image of the surroundings of a vehicle at a more appropriate timing.

According to a first aspect of the present disclosure, there is provided an image recording device including: an approach recording unit configured to execute a parking approach recording function of recording an image of surroundings of a vehicle being parked when an object approaches a vicinity of the vehicle; an acquisition unit configured to acquire surrounding environment information of the vehicle; and a function control unit configured to turn off the parking approach recording function of the approach recording unit based on the surrounding environment information acquired by the acquisition unit.

In the image recording device, it is possible to turn off the parking approach recording function of the approach recording unit based on the surrounding environment information of the vehicle. This makes it possible for the image recording device to record the image of the surroundings of the vehicle at a more appropriate timing.

In the image recording device, the function control unit may determine whether a risk to the vehicle is present or absent based on the surrounding environment information and may turn off the parking approach recording function when the risk is absent. For example, when the risk to the vehicle is absent, it is considered that the recording of the image by the parking approach recording function is unnecessary. Therefore, when it is determined that the risk to the vehicle is absent, the image recording device turns off the parking approach recording function such that the image of the surroundings of the vehicle is not recorded. This makes it possible for the image recording device to record the image of the surroundings of the vehicle at a more appropriate timing.

In the image recording device, the surrounding environment information may include at least one of frequency information indicating a detection frequency of the object approaching the vicinity of the vehicle and brightness information indicating brightness around the vehicle. For example, when the frequency of the object approaching the vehicle is high, it is considered that the risk to the vehicle is high. In addition, for example, when the brightness around the vehicle is low, it is considered that the risk to the vehicle is high. Therefore, the image recording device determines the risk to the vehicle based on at least one of the frequency information and the brightness information. This makes it possible for the image recording device to record the image of the surroundings of the vehicle at a more appropriate timing, based on at least one of the frequency information and the brightness information.

In the image recording device, the surrounding environment information may include the frequency information, and the function control unit may determine that the risk is absent when the detection frequency is equal to or greater than a predetermined frequency threshold value based on the frequency information. In this case, the image recording device can compare the detection frequency indicated by the frequency information with the frequency threshold value to more appropriately determine whether a risk to the vehicle is present or absent.

In the image recording device, the surrounding environment information may include the brightness information, and the function control unit may determine that the risk is absent when the brightness around the vehicle is equal to or greater than a predetermined brightness threshold value based on the brightness information. In this case, the image recording device can compare the brightness indicated by the brightness information with the brightness threshold value to more appropriately determine whether a risk to the vehicle is present or absent.

In the image recording device, the surrounding environment information may include the frequency information and the brightness information, and the function control unit may determine that the risk is absent when the detection frequency is equal to or greater than a predetermined frequency threshold value and the brightness around the vehicle is equal to or greater than a predetermined brightness threshold value based on the frequency information and the brightness information. In this case, the image recording device can compare the detection frequency indicated by the frequency information with the frequency threshold value and compare the brightness indicated by the brightness information with the brightness threshold value to more appropriately determine whether a risk to the vehicle is present or absent.

In the image recording device, the surrounding environment information may include the frequency information and the brightness information, the function control unit may determine that the risk is absent when the detection frequency is equal to or greater than a predetermined frequency threshold value based on the frequency information, and the frequency threshold value may be set to a smaller value as the brightness indicated by the brightness information is higher. For example, when the brightness around the vehicle is high, it is considered that the risk to the vehicle is low even though the frequency of the object approaching the vehicle is high. On the other hand, when the brightness around the vehicle is low, it is considered that the risk to the vehicle is high even though the frequency of the object approaching the vehicle is low. Therefore, the image recording device determines whether a risk to the vehicle is present or absent, using the frequency threshold value set to a smaller value as the brightness indicated by the brightness information is higher. This makes it possible for the image recording device to more appropriately determine whether a risk to the vehicle is present or absent, taking into account the relationship between the brightness around the vehicle and the approach frequency of the object.

According to a second aspect of the present disclosure, there is provided a vehicle including: an approach recording unit configured to execute a parking approach recording function of recording an image of surroundings of the vehicle being parked when an object approaches a vicinity of the vehicle; an acquisition unit configured to acquire surrounding environment information of the vehicle; and a function control unit configured to turn off the parking approach recording function of the approach recording unit based on the surrounding environment information acquired by the acquisition unit.

In the vehicle, it is possible to turn off the parking approach recording function of the approach recording unit based on the surrounding environment information of the vehicle. This makes it possible for the vehicle to record the image of the surroundings of the vehicle at a more appropriate timing.

According to a third aspect of the present disclosure, there is provided an image recording method performed in an image recording device configured to execute a parking approach recording function of recording an image of surroundings of a vehicle being parked when an object approaches a vicinity of the vehicle. The image recording method includes: executing the parking approach recording function; acquiring surrounding environment information of the vehicle; and turning off the parking approach recording function executed in the step of executing the parking approach recording function, based on the surrounding environment information acquired in the step of acquiring surrounding environment information.

In the image recording method, it is possible to turn off the parking approach recording function of the approach recording unit based on the surrounding environment information of the vehicle. This makes it possible to record the image of the surroundings of the vehicle at a more appropriate timing in the image recording method.

According to a fourth aspect of the present disclosure, there is provided a program for operating an image recording device configured to execute a parking approach recording function of recording an image of surroundings of a vehicle being parked when an object approaches a vicinity of the vehicle. The program causes the image recording device to perform: executing the parking approach recording function; acquiring surrounding environment information of the vehicle; and turning off the parking approach recording function based on the acquired surrounding environment information.

In the program, it is possible to turn off the parking approach recording function of the approach recording unit based on the surrounding environment information of the vehicle. This makes it possible to record the image of the surroundings of the vehicle at a more appropriate timing in the program.

According to various aspects of the present disclosure, it is possible to record an image of the surroundings of a vehicle at a more appropriate timing.

### BRIEF DESCRIPTION OF THE DRAWINGS

FIG. 1 is a block diagram showing an example of an image recording device according to an embodiment.
FIG. 2 is a top view showing a plurality of cameras provided on a vehicle and an object detection area set around the vehicle.
FIG. 3 is a flowchart showing a flow of a process when an approach recording unit executes a parking approach recording function.
FIG. 4 is a view showing a process of acquiring a detection frequency.
FIG. 5 is a view showing a relationship between an illuminance class and a frequency threshold value.
FIG. 6 is a flowchart showing a flow of a process of an image recording method executed in an ECU of the image recording device.
FIG. 7 is a flowchart showing a flow of a process in a modification example of the image recording method executed in the ECU of the image recording device.
FIG. 8 is a flowchart showing a flow of a process in a modification example of the image recording method executed in the ECU of the image recording device.
FIG. 9 is a flowchart showing a flow of a process in a modification example of the image recording method executed in the ECU of the image recording device.

### DETAILED DESCRIPTION

Hereinafter, exemplary embodiments will be described with reference to the drawings. In addition, in each drawing, the same or corresponding elements are denoted by the same reference numerals, and a redundant description thereof will be omitted.

### [Overall Configuration of Image Recording Device]

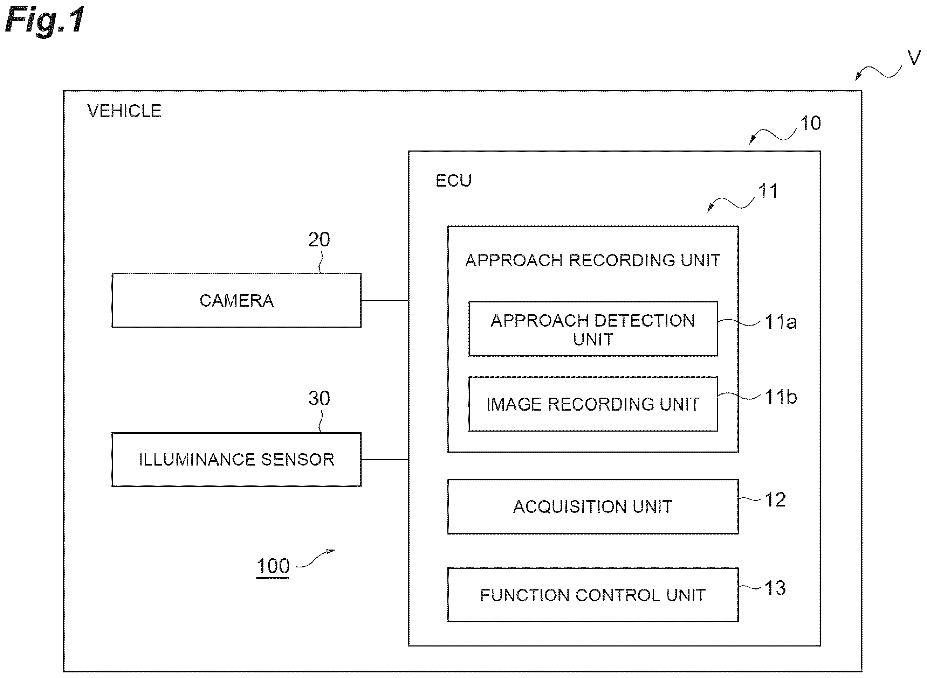

As shown in FIG. 1, an image recording device 100 is mounted on a vehicle V. The image recording device 100 records an image of the surroundings of the vehicle V. The image recording device 100 detects an object approaching the vehicle V. When an object approaches the vehicle V, the image recording device 100 records the image of the surroundings of the vehicle V. Here, the objects which are detected by the image recording device 100 and whose images are recorded by image recording device 100 include various objects approaching the vehicle V, such as persons, bicycles, and vehicles.

The image recording device 100 includes an electronic control unit [ECU] 10 centrally managing the device. The ECU 10 is an electronic control unit having a central processing unit [CPU] and a storage unit. The storage unit is composed of, for example, a read only memory [ROM], a random access memory [RAM], and an electrically erasable programmable read-only memory [EEPROM]. In the ECU 10, for example, the CPU executes a program stored in the storage unit to implement various functions. The ECU 10 may be composed of a plurality of electronic control units.

The ECU 10 is connected to a camera unit 20 and an illuminance sensor 30. The devices connected to the ECU 10 are mounted on the vehicle V.

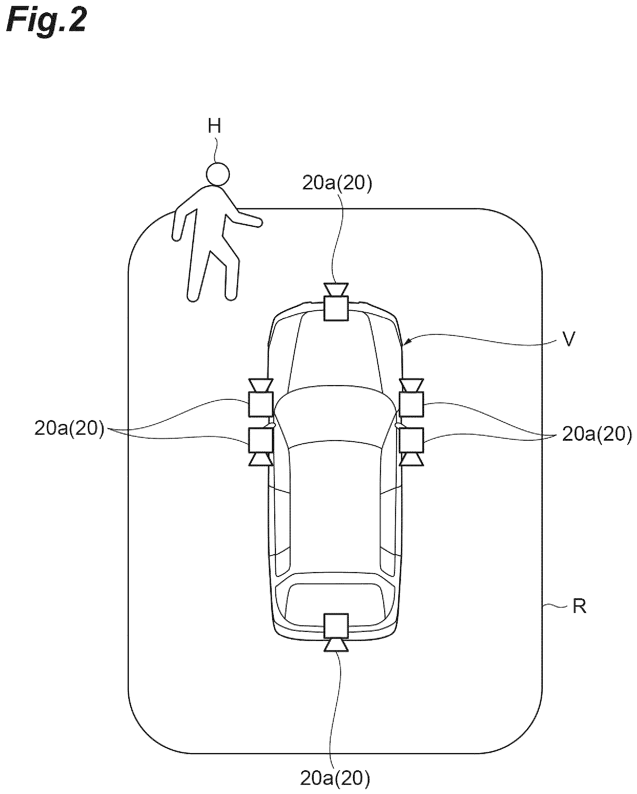

The camera unit 20 is an imaging device capturing an image of an external situation around the vehicle V. The camera unit 20 transmits the captured image to the ECU 10. As shown in FIG. 2, the camera unit 20 includes a plurality of cameras 20a so as to capture an image of the entire area around the vehicle V. That is, the image of the entire area around the vehicle V is captured by the plurality of cameras 20a. The number of cameras 20a included in the camera unit 20 is not particularly limited. The cameras 20a constituting the camera unit 20 may be provided in a quantity sufficient to capture the image of (substantially) the entire area around the vehicle V. Further, each of the cameras 20a may be installed in a direction in which the cameras 20a can capture the image of (substantially) the entire area around the vehicle V.

The illuminance sensor 30 detects the illuminance around the vehicle V (an external environment in which the vehicle V is stopped). The illuminance sensor 30 may be provided, for example, inside a cabin of the vehicle V or on an exterior surface of the vehicle V. The type of the illuminance sensor 30 is not particularly limited. The illuminance sensor 30 transmits detected illuminance information to the ECU 10.

The ECU 10 executes a parking approach recording function that records the captured image (image) of the surroundings of the vehicle V captured by the camera unit 20 when an object approaches the vicinity of the vehicle V during the parking of the vehicle V. In order to execute the parking approach recording function, the ECU 10 functionally includes an approach recording unit 11, an acquisition unit 12, and a function control unit 13.

The approach recording unit 11 includes an approach detection unit 11a and an image recording unit 11b. The approach recording unit 11 executes the parking approach recording function, using the approach detection unit 11a and the image recording unit 11b. The approach detection unit 11a detects the approach of an object to the vehicle V based on the image captured by the camera unit 20. For example, the approach detection unit 11a sets an object detection area R around the vehicle V as shown in FIG. 2. The approach detection unit 11a detects the approach of the object to the vehicle V to detect whether the object is present or absent within the object detection area R based on the image captured by the camera unit 20. For example, as shown in FIG. 2, when an object H (a "person" as an example in FIG. 2) is present within the object detection area R, the approach detection unit 11a detects the object H within the object detection area R as the object approaching the vehicle V. In addition, the approach detection unit 11a can detect whether an object is present or absent in the object detection area R from the image captured by the camera 20a, for example, using a known image processing technique.

The image recording unit 11b executes a process of recording the image captured by the camera unit 20 onto a recording medium. Here, when the approach detection unit 11a detects the object approaching the vehicle V, the image recording unit 11b records the image captured by the camera unit 20 onto the recording medium. That is, when the approach detection unit 11a does not detect any object approaching the vehicle V, the image captured by the camera unit 20 is not stored. The recording medium onto which the captured image is recorded may be, for example, a non-volatile memory. This recording medium may be, for example, detachable from the image recording device 100.

Further, the camera unit 20 includes the camera 20a used by the approach detection unit 11a to detect the approach of an object and the camera 20a used by the image recording unit 11b to record the captured image. Among a plurality of cameras 20a provided in the camera unit 20, the camera 20a used by the approach detection unit 11a and the camera 20a used by the image recording unit 11b may be the same as each other, may be partially the same as each other, or may be different from each other.

A case where the camera 20a used by the approach detection unit 11a and the camera 20a used by the image recording unit 11b are the same as each other is a case where all of the plurality of cameras 20a provided in the camera unit 20 are used both for detecting an object and for recording the captured image. A case where the camera 20a used by the approach detection unit 11a and the camera 20a used by the image recording unit 11b are different from each other is a case where the camera 20a dedicated to detecting an object and the camera 20a dedicated to recording an image are provided. A case where the camera 20a used by the approach detection unit 11a and the camera 20a used by the image recording unit 11b are partially the same as each other is a case where the camera 20a dedicated to detecting an object, the camera 20a dedicated to recording an image, and the camera 20a used both for detecting an object and for recording an image are provided.

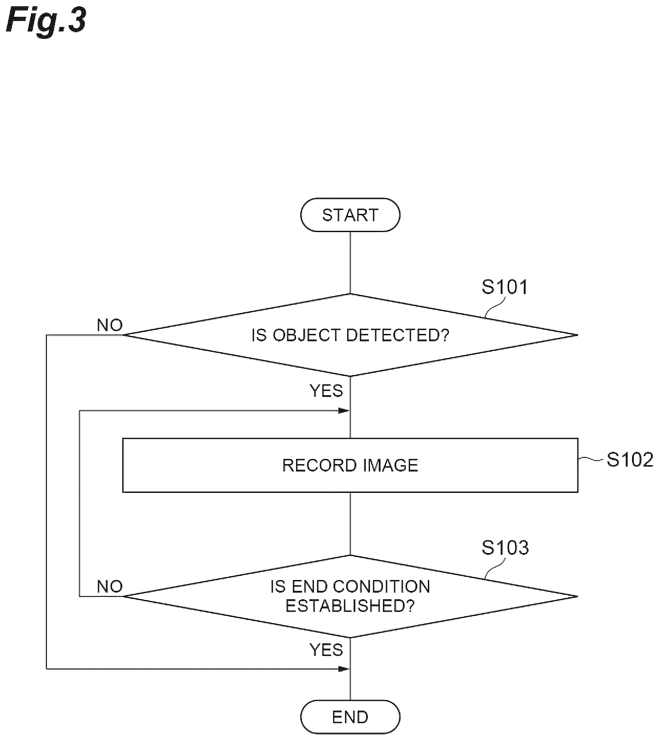

Here, a flow of a process when the approach recording unit 11 executes the parking approach recording function will be described with reference to FIG. 3. In addition, the function control unit 13 can issue an instruction for switching between the on and off states of the parking approach recording function of the approach recording unit 11. The approach recording unit 11 switches the parking approach recording function between the on and off states based on the instruction from the function control unit 13. In addition, turning on the parking approach recording function means executing the parking approach recording function, and turning off the parking approach recording function means stopping the execution of the parking approach recording function. That is, the process shown in FIG. 3 is executed when the parking approach recording function is turned on. When the process shown in FIG. 3 reaches the end, the process is resumed from the start after a predetermined period of time. When the parking approach recording function is turned off, the process shown in FIG. 3 is stopped.

As shown in FIG. 3, when the parking approach recording function is turned on, the approach detection unit 11a performs a process of detecting the presence or absence of an object approaching the vehicle V based on the image captured by the camera unit 20 (S101). When the object is not detected (S101: NO), the process proceeds to the end. When the object is detected (S101: YES), the image recording unit 11b records the image captured by the camera unit 20 onto the recording medium (S102). Then, the image recording unit 11b determines whether or not a condition for ending the process of recording the captured image is satisfied (S103). For example, a case where the condition for ending the process of recording the captured image is satisfied may be a case where the elapsed time since the start of the recording of the captured image is equal to or greater than a predetermined time threshold value. Alternatively, a case where this end condition is satisfied may be a case where the object detected by the approach detection unit 11a moves outside the object detection area R and is no longer detected within the object detection area R.

When the end condition is not satisfied (S103: NO), the image recording unit 11b performs the processes in S102 and S103 until the condition is satisfied. When the end condition is satisfied (S103: YES), the process proceeds to the end.

The acquisition unit 12 shown in FIG. 1 acquires surrounding environment information of the vehicle V. The surrounding environment information of the vehicle V includes frequency information indicating the detection frequency of the object approaching the vicinity of the vehicle V and brightness information indicating brightness around the vehicle V.

In this embodiment, the acquisition unit 12 uses the detection frequency of the object by the approach detection unit 11a as the detection frequency of the object approaching the vicinity of the vehicle V. The detection frequency can be determined based on the number of times the object has been detected by the approach detection unit 11a within a predetermined period from the present to the past. That is, the detection frequency changes over time. As described above, the frequency information included in the surrounding environment information represents the frequency of the object passing around the vehicle V.

In this embodiment, for example, the acquisition unit 12 can acquire the current detection frequency based on the following conditions (a) to (c):
(a) One minute is defined as one cycle. However, one cycle may be set to a period other than one minute;
(b) When the approach detection unit 11a detects the object approaching the vehicle V at least once during one cycle, this cycle is set as a detection ON cycle, and a cycle that does not satisfy this condition is set as a detection OFF cycle; and
(c) The most recent 10 cycles from the current time are checked, and the number of detection ON cycles among the most recent 10 cycles is counted as a total detection ON count. The acquisition unit 12 acquires the total detection ON count as the detection frequency.

Furthermore, even when an object is detected a plurality of times during one cycle as in the condition (b), the detection frequency count is regarded as 1. This makes it possible to prevent a situation in which the same object (for example, the same person) is detected a plurality of times in succession, resulting in an erroneous determination that the detection frequency of the object is high.

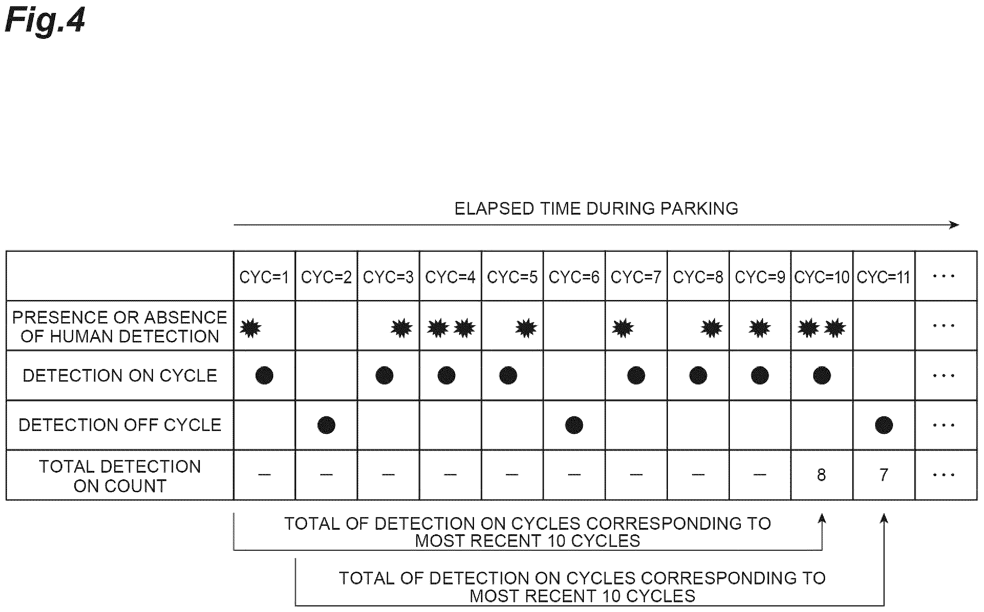

A method for counting the detection frequency will be described with reference to FIG. 4. Further, in FIG. 4, a first cycle is represented as "CYC = 1". Similarly, an N-th cycle is represented as "CYC = N". In a "Presence or absence of human detection" row in FIG. 4, an asterisk indicates that the object approaching the vicinity of the vehicle V has been detected by the approach detection unit 11a. In a "Detection ON cycle" row in FIG. 4, a cycle marked with a solid black circle indicates that this cycle corresponds to the detection ON cycle. In a "Detection OFF cycle" row in FIG. 4, a cycle marked with a solid black circle indicates that this cycle corresponds to the detection OFF cycle.

In FIG. 4, for example, an object is detected at CYC = 1, and the cycle is the detection ON cycle. For example, an object is not detected at CYC = 2, and the cycle is the detection OFF cycle. For example, an object is detected twice at CYC = 4, and the cycle is the detection ON cycle. At the time when CYC = 10 ends, the total detection ON count of the detection ON cycles corresponding to the most recent 10 cycles (CYC = 1 to CYC = 10) is calculated. Here, the total detection ON count is 8. Therefore, the acquisition unit 12 can acquire, as the detection frequency, the total detection ON count of 8 at the time when CYC = 10 ends. Similarly, the total detection ON count is calculated, which makes it possible for the acquisition unit 12 to acquire a total detection ON count of 7 at the time when CYC = 11 ends as the detection frequency at the time when CYC = 11 ends.

Furthermore, the method for acquiring the detection frequency described with reference to FIG. 4 is only an example. The acquisition unit 12 may acquire frequency information (detection frequency) using a method other than the method described with reference to FIG. 4 as long as it indicates the frequency of the object approaching the vicinity of the vehicle V.

In this embodiment, the acquisition unit 12 can acquire the brightness information included in the surrounding environment information, for example, based on the detection result of the illuminance sensor 30. The brightness information includes information indicating the degree of brightness.

The function control unit 13 shown in FIG. 1 controls the switching between the on and off states of the parking approach recording function of the approach recording unit 11. The function control unit 13 issues an instruction to the approach recording unit 11 to turn on or off the parking approach recording function of the approach recording unit 11. When the vehicle V is parked, the function control unit 13 turns on the parking approach recording function of the approach recording unit 11. In addition, even when the vehicle V is parked, the function control unit 13 turns off the parking approach recording function of the approach recording unit 11 based on the surrounding environment information acquired by the acquisition unit 12. In addition, when the vehicle V remains parked for a predetermined set period of time or longer after the parking approach recording function of the approach recording unit 11 is turned off, the function control unit 13 turns on the parking approach recording function.

Further, the function control unit 13 can acquire information of whether or not the vehicle V is being parked from, for example, a vehicle control unit configured to control the traveling of the vehicle V. A case where the vehicle V is parked may be, for example, a case where an ignition switch of the vehicle V is turned off or a case where the supply of power to a drive unit (an electric motor or the like) of the vehicle V is cut off. For example, the case where the vehicle V is parked may be a case where the vehicle V is stopped and there are no occupants in the vehicle V. The function control unit 13 can determine whether or not there are occupants in the vehicle V based on, for example, the image captured by the camera configured to capture the interior of the vehicle V or the detection result of a pressure sensor that is installed in a seat of the vehicle V and detects whether or not there is a person sitting in the seat.

In order to control the switching between the on and off states of the parking approach recording function of the approach recording unit 11, the function control unit 13 determines whether a risk to the vehicle V being parked is present or absent, based on the surrounding environment information acquired by the acquisition unit 12. The risk to the vehicle V here is a risk caused by objects around the vehicle V. For example, the risk to the vehicle V may be that a person or the like around the vehicle V is likely to approach the vehicle V with malicious intent and to engage in acts such as vehicle vandalism, vehicle burglary (theft of items from the inside of the vehicle), or theft of the vehicle. This risk to the vehicle V is generally more likely to occur in areas with low pedestrian traffic than in areas with high pedestrian traffic. Furthermore, this risk to the vehicle V is generally more likely to occur at night or in dimly lit indoor parking lots than in outdoor locations during daytime with clear visibility.

Therefore, the function control unit 13 determines whether a risk to the vehicle V being parked is present or absent, based on the frequency information and the brightness information included in the surrounding environment information acquired by the acquisition unit 12. Here, when determining that the detection frequency is equal to or greater than a predetermined frequency threshold value based on the frequency information acquired by the acquisition unit 12, the function control unit 13 determines that the risk is absent. In addition, the frequency threshold value is set to a smaller value as the brightness indicated by the brightness information acquired by the acquisition unit 12 is higher. When determining that the risk to the vehicle V is absent during the parking of the vehicle V, the function control unit 13 turns off the parking approach recording function of the approach recording unit 11.

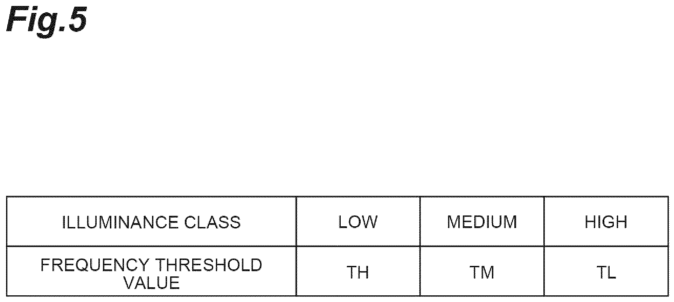

As described above, the frequency threshold value to be compared with the detection frequency is set to a smaller value as the brightness indicated by the brightness information acquired by the acquisition unit 12 is higher. For example, the brightness around the vehicle V is divided into three illuminance classes of "low", "medium", and "high". The illuminance classes increase in brightness in the order of "low", "medium", and "high". The frequency threshold value is set for each illuminance class. Here, as shown in FIG. 5, frequency threshold values "TH", "TM", and "TL" are set for the illuminance classes "low", "medium", and "high", respectively. The frequency threshold values decrease in the order of "TH", "TM", and "TL". That is, the frequency threshold values satisfy "TH" > "TM" > "TL".

In this embodiment, the function control unit 13 determines an illuminance class corresponding to the brightness indicated by the brightness information based on the brightness information acquired by the acquisition unit 12. Then, the function control unit 13 compares the frequency threshold value corresponding to the determined illuminance class with the detection frequency indicated by the frequency information acquired by the acquisition unit 12. When the detection frequency is equal to or greater than the frequency threshold value, the function control unit 13 determines that the risk is absent. As described above, the function control unit 13 uses a smaller frequency threshold value as the illuminance class is higher. That is, as the brightness around the vehicle V is higher, the function control unit 13 is more likely to determine that the risk is absent and is more likely to turn off the parking approach recording function.

As described above, generally, the risk to the vehicle V is more likely to occur in a dark and low-visibility environment than in a bright and high-visibility environment around the vehicle V. In addition, the risk to the vehicle V is considered to be higher in a darker environment with lower pedestrian traffic. Conversely, a bright environment is considered as an environment in which the risk to the vehicle V is low since visibility is inherently high and it is possible to sufficiently suppress the risk to the vehicle V even when there is low pedestrian traffic. Therefore, the function control unit 13 performs the determination, using the frequency information and the brightness information acquired by the acquisition unit 12 and the frequency threshold value set to a smaller value as the brightness is higher. This makes it possible for the function control unit 13 to more appropriately determine whether a risk to the vehicle V is present or absent based on the pedestrian traffic and brightness around the vehicle V.

### [Image Recording Method]

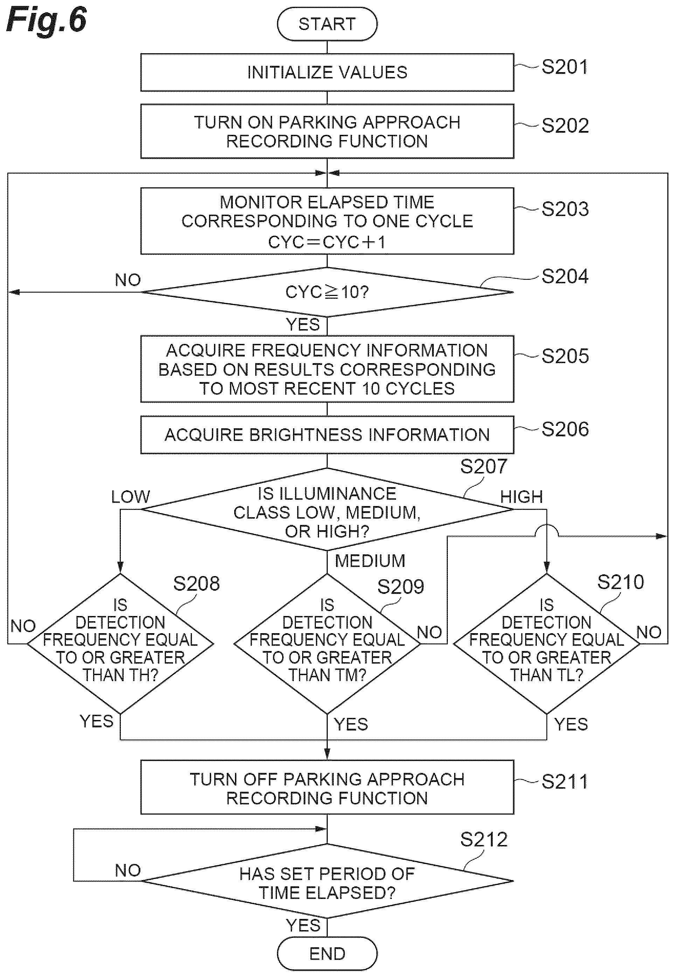

Next, a flow of a process of the image recording method executed in the ECU 10 of the image recording device 100 will be described with reference to a flowchart shown in FIG. 6. In addition, the process of the image recording method described with reference to FIG. 6 is executed when the vehicle V is parked. That is, the execution of the process shown in FIG. 6 is started when the vehicle V is parked and is ended when the parking of the vehicle V is ended. Moreover, when the process shown in FIG. 6 reaches the end, the process is resumed from the start after a predetermined period of time.

As shown in FIG. 6, the function control unit 13 initializes "CYC", which is a cycle number (a number indicating how many cycles have occurred) used to count the detection frequency, and the "total detection ON count" used to calculate the detection frequency (S201). That is, the function control unit 13 sets "CYC = 0" and "total detection ON count = 0". The function control unit 13 issues an instruction to the approach recording unit 11 to turn on the parking approach recording function. Then, the approach recording unit 11 executes the parking approach recording function (S202: a function execution step).

The acquisition unit 12 acquires the detection frequency based on the detection result of the approach detection unit 11a of the approach recording unit 11 executing the parking approach recording function. Therefore, the acquisition unit 12 monitors whether or not an object has been detected by the approach detection unit 11a and also monitors whether or not the time (for example, one minute) corresponding to one cycle used to acquire the detection frequency has elapsed. When the time corresponding to one cycle has elapsed, the acquisition unit 12 adds "1" to the number of cycles. That is, the acquisition unit 12 performs a process of setting "CYC = CYC + 1" (S203). In addition, the acquisition unit 12 sets a cycle in which an object has been detected by the approach detection unit 11a as the detection ON cycle and sets a cycle in which this condition is not satisfied as the detection OFF cycle.

Then, the acquisition unit 12 determines whether or not the number of cycles "CYC" is equal to or greater than 10 (S204). When the number of cycles "CYC" is not equal to or greater than 10 (S204: NO), the acquisition unit 12 repeats the processes in S203 and S204 until the number of cycles "CYC" is equal to or greater than 10.

When the number of cycles "CYC" is equal to or greater than 10 (S204: YES), the acquisition unit 12 checks the most recent 10 cycles from the current time point and counts the number of detection ON cycles (calculates the total detection ON count) among the most recent 10 cycles. Then, the acquisition unit 12 acquires the calculated total detection ON count as the detection frequency (S205: an acquisition step). Therefore, the acquisition unit 12 can acquire the detection frequency as the frequency information. Then, the acquisition unit 12 acquires the brightness information based on the detection result of the illuminance sensor 30 (S206: an acquisition step). In this way, the acquisition unit 12 acquires the surrounding environment information of the vehicle V including the frequency information and the brightness information in S205 and S206.

The function control unit 13 determines whether the illuminance class of the brightness indicated by the illuminance information acquired by the acquisition unit 12 is "low", "medium", or "high" (S207). When the illuminance class is "low" (S207: low), the function control unit 13 determines whether or not the detection frequency acquired in S205 is equal to or greater than the frequency threshold value TH (S208). When the detection frequency is not equal to or greater than the frequency threshold value TH (S208: NO), the process proceeds to S203. When the detection frequency is equal to or greater than the frequency threshold value TH (S208: YES), the process proceeds to S211.

When the illuminance class is "medium" (S207: medium), the function control unit 13 determines whether or not the detection frequency acquired in S205 is equal to or greater than the frequency threshold value TM (S209). When the detection frequency is not equal to or greater than the frequency threshold value TM (S209: NO), the process proceeds to S203. When the detection frequency is equal to or greater than the frequency threshold value TM (S209: YES), the process proceeds to S211. When the illuminance class is "high" (S207: high), the function control unit 13 determines whether or not the detection frequency acquired in S205 is equal to or greater than the frequency threshold value TL (S210). When the detection frequency is not equal to or greater than the frequency threshold value TL (S210: NO), the process proceeds to S203. When the detection frequency is equal to or greater than the frequency threshold value TL (S210: YES), the process proceeds to S211.

That is, when it is determined in S208 that the detection frequency is not equal to or greater than the frequency threshold value TH, when it is determined in S209 that the detection frequency is not equal to or greater than the frequency threshold value TM, or when it is determined in S210 that the detection frequency is not equal to or greater than the frequency threshold value TL, the function control unit 13 determines that the risk to the vehicle V is present and does not turn off the parking approach recording function. The function control unit 13 maintains the on state of the parking approach recording function.

In S211, the function control unit 13 determines that the risk to the vehicle V is absent and turns off the parking approach recording function of the approach recording unit 11 (S211: a function control step). Then, the function control unit 13 determines whether or not the vehicle V has remained parked for a predetermined set period of time or longer since the parking approach recording function of the approach recording unit 11 has been turned off (S212). When the predetermined set period of time has not elapsed (S212: NO), the function control unit 13 repeats the determination process in S212 until the predetermined set period of time elapses. When the predetermined set period of time has elapsed (S212: YES), the process proceeds to the end. Therefore, the process is resumed from the start, and the parking approach recording function is turned on in S202.

In addition, the predetermined set period of time used in the determination in S212 may be changed by the function control unit 13 according to, for example, the brightness indicated by the brightness information acquired by the acquisition unit 12. In this case, the predetermined set period of time may be set shorter as the brightness indicated by the brightness information is lower, as compared to when the brightness is high. Alternatively, the setting of the predetermined set period of time may be changed by, for example, the user of the image recording device 100 (vehicle V).

### [Program]

A program causes the ECU 10 (computer) to function (operate) as the approach recording unit 11, the acquisition unit 12, and the function control unit 13. The program may be provided by a nontransitory recording medium such as a ROM or a semiconductor memory. In addition, the program may be provided from a network or the like via wireless communication.

As described above, in the image recording device 100, it is possible to turn off the parking approach recording function of the approach recording unit 11 based on the surrounding environment information of the vehicle V. This makes it possible for the image recording device 100 to record the image of the surroundings of the vehicle V at a more appropriate timing. Further, since the image recording device 100 turns off the parking approach recording function based on the surrounding environment information, it is possible to suppress the power consumption of a vehicle-mounted battery supplying power to the image recording device 100. Furthermore, since the image recording device 100 turns off the parking approach recording function based on the surrounding environment information, it is possible to suppress the depletion of a storage area of the recording medium recording the images captured by the camera unit 20.

For example, when the risk to the vehicle V is absent, it is considered that the recording of the image by the parking approach recording function is unnecessary. Therefore, when it is determined that the risk to the vehicle V is absent, the image recording device 100 turns off the parking approach recording function such that the image of the surroundings of the vehicle V is not recorded. This makes it possible for the image recording device 100 to record the image of the surroundings of the vehicle V at a more appropriate timing.

The acquisition unit 12 acquires the frequency information indicating the detection frequency of the object approaching the vicinity of the vehicle V and the brightness information indicating the brightness around the vehicle V as the surrounding environment information. For example, when the frequency of the object approaching the vehicle V is high, it is considered that the risk to the vehicle V is high. In addition, for example, when the brightness around the vehicle V is low, it is considered that the risk to the vehicle V is high. Therefore, the image recording device 100 determines the risk to the vehicle V based on the frequency information and the brightness information. This makes it possible for the image recording device 100 to record the image of the surroundings of the vehicle V at a more appropriate timing, based on the frequency information and the brightness information.

For example, when the brightness around the vehicle V is high, it is considered that the risk to the vehicle V is low even though the frequency of the object approaching the vehicle V is high. On the other hand, when the brightness around the vehicle V is low, it is considered that the risk to the vehicle V is high even though the frequency of the object approaching the vehicle V is low. Therefore, the image recording device 100 determines whether a risk to the vehicle V is present or absent, using the frequency threshold value set to a smaller value as the brightness indicated by the brightness information is higher. This makes it possible for the image recording device 100 to more appropriately determine whether a risk to the vehicle V is present or absent, taking into account the relationship between the brightness around the vehicle V and the approach frequency of the object.

For the above points, the same effects can be obtained from the vehicle V having the image recording device 100 according to this embodiment, the program causing the ECU 10 of the vehicle V to operate as the image recording device 100, and the image recording method performed in the image recording device 100.

The embodiment of the present disclosure has been described above, but the present disclosure is not limited to the above-described embodiment. For example, in the above-described embodiment, the brightness around the vehicle V is divided into three illuminance classes of "low", "medium", and "high". However, the present disclosure is not limited to this, and the brightness may be divided into illuminance classes other than the three illuminance classes. Further, the frequency threshold value set for each illuminance class may be changed by the user of the image recording device 100 (vehicle V).

In the above-described embodiment, the surrounding environment information includes the frequency information and the brightness information. However, the present disclosure is not limited to this, and the surrounding environment information may include at least one of the frequency information and the brightness information.

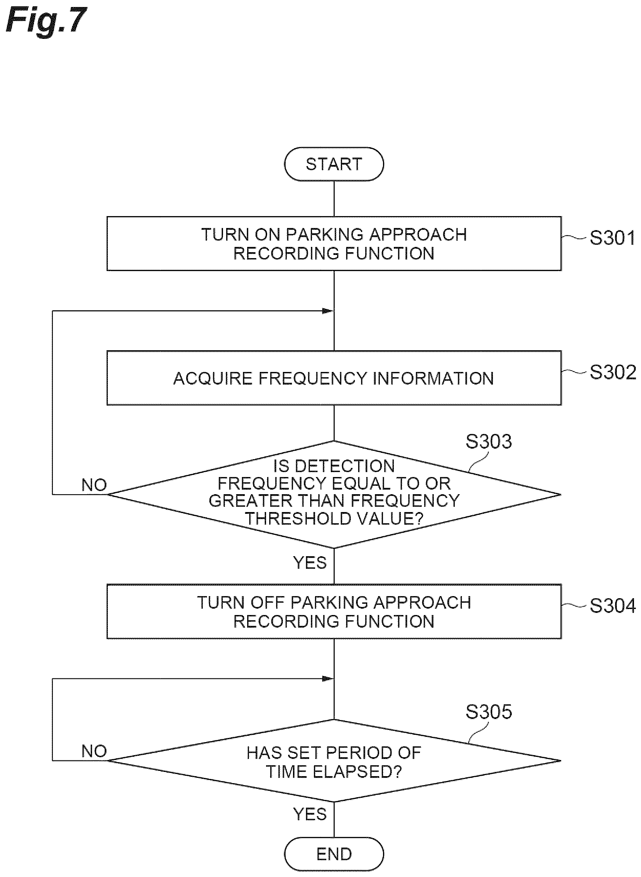

For example, the surrounding environment information may include only the frequency information. In this case, the function control unit 13 determines that the risk to the vehicle V is absent when the detection frequency is equal to or greater than a predetermined frequency threshold value based on the frequency information. That is, when the detection frequency is equal to or greater than the predetermined frequency threshold value during the parking of the vehicle V, the function control unit 13 turns off the parking approach recording function. Specifically, when the surrounding environment information includes only the frequency information, the ECU 10 executes a process of an image recording method shown in a flowchart of FIG. 7.

Here, as shown in FIG. 7, the function control unit 13 issues an instruction to the approach recording unit 11 to turn on the parking approach recording function (S301). The acquisition unit 12 acquires the frequency information including the detection frequency of the object detected by the approach detection unit 11a (S302). For example, the acquisition unit 12 can acquire the frequency information using the same processes as those in S201 and S203 to S205 described with reference to the flowchart in FIG. 6 in the embodiment. The function control unit 13 determines whether or not the acquired detection frequency is equal to or greater than a predetermined frequency threshold value (S303). When the detection frequency is less than the predetermined frequency threshold value (S303: NO), the ECU 10 executes the process again from S302. That is, when the detection frequency is less than the predetermined frequency threshold value, the function control unit 13 determines that the risk to the vehicle V is present and does not turn off the parking approach recording function. The function control unit 13 maintains the on state of the parking approach recording function.

When the detection frequency is equal to or greater than the predetermined frequency threshold value (S303: YES), the function control unit 13 determines that the risk to the vehicle V is absent and turns off the parking approach recording function of the approach recording unit 11 (S304). Then, the function control unit 13 determines whether or not the vehicle V has remained parked for a predetermined set period of time or longer since the parking approach recording function of the approach recording unit 11 has been turned off (S305). When the predetermined set period of time has not elapsed (S305: NO), the function control unit 13 repeats the determination process in S305 until the predetermined set period of time elapses. When the predetermined set period of time has elapsed (S305: YES), the process proceeds to the end. Therefore, the process is resumed from the start, and the parking approach recording function is turned on in S301. As described above, even when the surrounding environment information includes only the frequency information, the image recording device 100 can compare the detection frequency indicated by the frequency information with the frequency threshold value to more appropriately determine whether a risk to the vehicle V is present or absent.

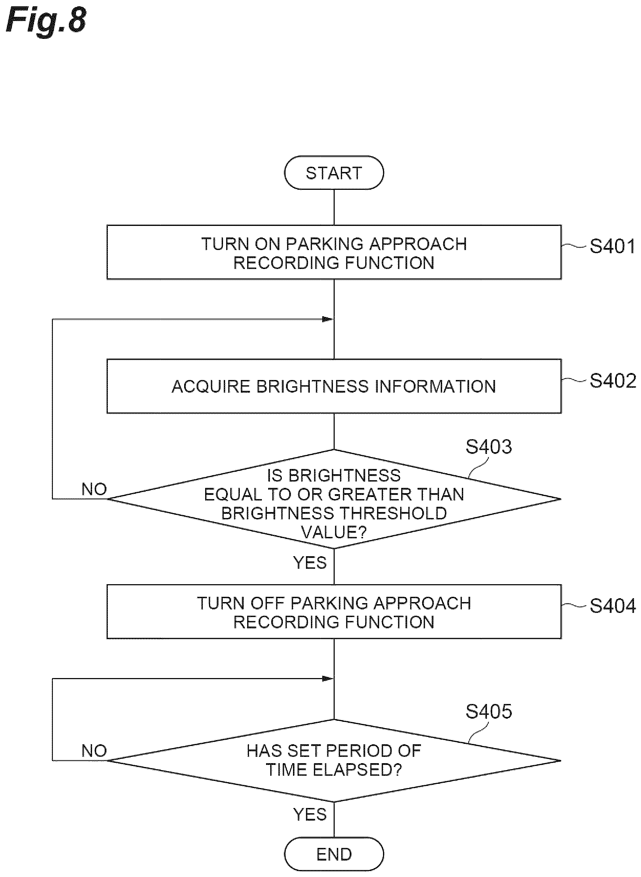

Further, for example, the surrounding environment information may include only the brightness information. In this case, the function control unit 13 determines that the risk to the vehicle V is absent when the brightness around the vehicle V is equal to or greater than a predetermined brightness threshold value based on the brightness information. That is, when the brightness around the vehicle V is equal to or greater than the predetermined brightness threshold value during the parking of the vehicle V, the function control unit 13 turns off the parking approach recording function. Specifically, when the surrounding environment information includes only the brightness information, the ECU 10 executes a process of an image recording method shown in a flowchart of FIG. 8.

Here, as shown in FIG. 8, the function control unit 13 issues an instruction to the approach recording unit 11 to turn on the parking approach recording function (S401). The acquisition unit 12 acquires the brightness information based on the detection result of the illuminance sensor 30 (S402). The function control unit 13 determines whether the brightness around the vehicle V indicated by the acquired brightness information is equal to or greater than a predetermined brightness threshold value (S403). When the brightness is less than the predetermined brightness threshold value (S403: NO), the ECU 10 executes the process again from S402. That is, when the brightness is less than the predetermined brightness threshold value, the function control unit 13 determines that the risk to the vehicle V is present and does not turn off the parking approach recording function. The function control unit 13 maintains the on state of the parking approach recording function.

When the brightness is equal to or greater than the predetermined brightness threshold value (S403: YES), the function control unit 13 determines that the risk to the vehicle V is absent and turns off the parking approach recording function of the approach recording unit 11 (S404). Then, the function control unit 13 determines whether or not the vehicle V has remained parked for a predetermined set period of time or longer since the parking approach recording function of the approach recording unit 11 has been turned off (S405). When the predetermined set period of time has not elapsed (S405: NO), the function control unit 13 repeats the determination process in S405 until the predetermined set period of time elapses. When the predetermined set period of time has elapsed (S405: YES), the process proceeds to the end. Therefore, the process is resumed from the start, and the parking approach recording function is turned on in S401. As described above, even when the surrounding environment information includes only the brightness information, the image recording device 100 can compare the brightness around the vehicle V indicated by the brightness information with the brightness threshold value to more appropriately determine whether a risk to the vehicle V is present or absent.

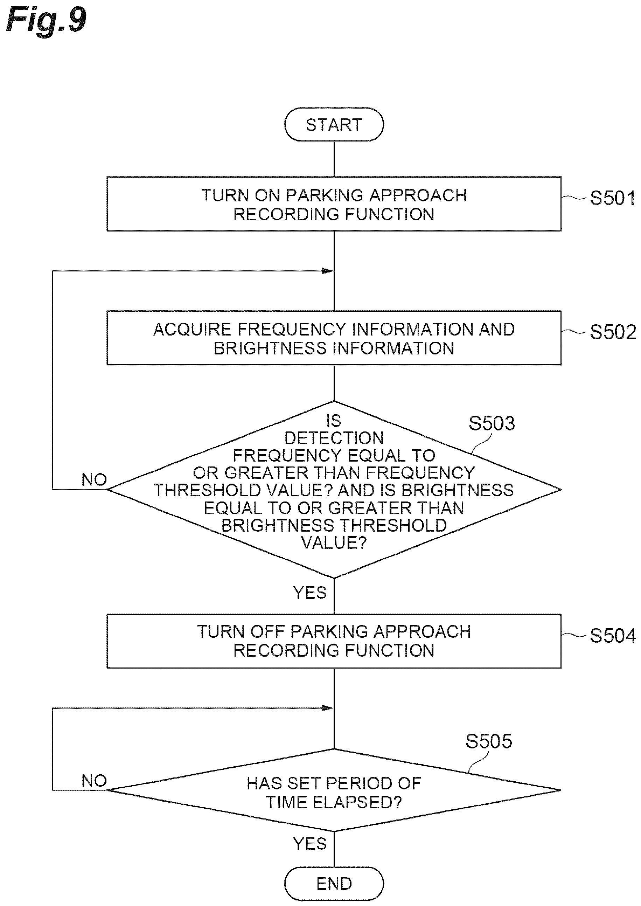

In addition, when the surrounding environment information includes both the frequency information and the brightness information, the function control unit 13 can determine whether a risk to the vehicle V is present or absent using a method different from the method described in the embodiment. In this case, the function control unit 13 determines that the risk to the vehicle V is absent when the detection frequency is equal to or greater than the predetermined frequency threshold value and the brightness around the vehicle V is equal to or greater than the predetermined brightness threshold value, based on the frequency information and the brightness information. That is, when the detection frequency is equal to or greater than the predetermined frequency threshold value and the brightness is equal to or greater than the predetermined brightness threshold value during the parking of the vehicle V, the function control unit 13 turns off the parking approach recording function. Specifically, when the surrounding environment information includes the frequency information and the brightness information, the ECU 10 executes a process of an image recording method shown in a flowchart of FIG. 9.

Here, as shown in FIG. 9, the function control unit 13 issues an instruction to the approach recording unit 11 to turn on the parking approach recording function (S501). The acquisition unit 12 acquires the frequency information including the detection frequency of the object detected by the approach detection unit 11a and the brightness information based on the detection result of the illuminance sensor 30 (S502). For example, the acquisition unit 12 can acquire the frequency information using the same processes as those in S201 and S203 to S205 described with reference to the flowchart in FIG. 6 in the embodiment. The function control unit 13 determines whether or not the acquired detection frequency is equal to or greater than the predetermined frequency threshold value and whether or not the brightness around the vehicle V indicated by the acquired brightness information is equal to or greater than the predetermined brightness threshold value (S503). When the detection frequency is less than the predetermined frequency threshold value, or when the brightness is less than the predetermined brightness threshold value (S503: NO), the ECU 10 executes the process again from S502. That is, when the detection frequency is less than the predetermined frequency threshold value, or when the brightness is less than the predetermined brightness threshold value, the function control unit 13 determines that the risk to the vehicle V is present and does not turn off the parking approach recording function. The function control unit 13 maintains the on state of the parking approach recording function.

When the detection frequency is equal to or greater than the predetermined frequency threshold value and the brightness is equal to or greater than the predetermined brightness threshold value (S503: YES), the function control unit 13 determines that the risk to the vehicle V is absent and turns off the parking approach recording function of the approach recording unit 11 (S504). Then, the function control unit 13 determines whether or not the vehicle V has remained parked for a predetermined set period of time or longer since the parking approach recording function of the approach recording unit 11 has been turned off (S505). When the predetermined set period of time has not elapsed (S505: NO), the function control unit 13 repeats the determination process in S505 until the predetermined set period of time elapses. When the predetermined set period of time has elapsed (S505: YES), the process proceeds to the end. Therefore, the process is resumed from the start, and the parking approach recording function is turned on in S501.

As described above, when the surrounding environment information includes the frequency information and the brightness information, the image recording device 100 can compare the detection frequency indicated by the frequency information with the frequency threshold value and compare the brightness indicated by the brightness information with the brightness threshold value to more appropriately determine whether a risk to the vehicle V is present or absent.

In addition, the setting of the frequency threshold value and the brightness threshold value used in the processes shown in FIGS. 7 to 9 may be changed by the user of the image recording device 100 (vehicle V). In addition, pedestrian traffic varies depending on the area or facility in which the vehicle V is parked, for example, whether the parking location of the vehicle V is a parking lot at home, a parking lot at a store, such as a supermarket, or a parking lot in an urban or a suburban area. Therefore, the frequency threshold value used in the embodiment and the frequency threshold value used in the processes shown in FIGS. 7 to 9 may be changed depending on the location where the vehicle V is parked.

## Claims

1. An image recording device (100) comprising:
an approach recording unit (11) configured to execute a parking approach recording function of recording an image of surroundings of a vehicle (V) being parked when an object approaches a vicinity of the vehicle (V);
an acquisition unit (12) configured to acquire surrounding environment information of the vehicle (V); and
a function control unit (13) configured to turn off the parking approach recording function of the approach recording unit (11) based on the surrounding environment information acquired by the acquisition unit (12).

2. The image recording device (100) according to claim 1,
wherein the function control unit (13) determines whether a risk to the vehicle (V) is present or absent based on the surrounding environment information and turns off the parking approach recording function when the risk is absent.

3. The image recording device (100) according to claim 2,
wherein the surrounding environment information includes at least one of frequency information indicating a detection frequency of the object approaching the vicinity of the vehicle (V) and brightness information indicating brightness around the vehicle (V).

4. The image recording device (100) according to claim 3,
wherein the surrounding environment information includes the frequency information, and
the function control unit (13) determines that the risk is absent when the detection frequency is equal to or greater than a predetermined frequency threshold value based on the frequency information.

5. The image recording device (100) according to claim 3,
wherein the surrounding environment information includes the brightness information, and
the function control unit (13) determines that the risk is absent when the brightness around the vehicle (V) is equal to or greater than a predetermined brightness threshold value based on the brightness information.

6. The image recording device (100) according to claim 3,
wherein the surrounding environment information includes the frequency information and the brightness information, and
the function control unit (13) determines that the risk is absent when the detection frequency is equal to or greater than a predetermined frequency threshold value and the brightness around the vehicle (V) is equal to or greater than a predetermined brightness threshold value based on the frequency information and the brightness information.

7. The image recording device (100) of claim 3,
wherein the surrounding environment information includes the frequency information and the brightness information,
the function control unit (13) determines that the risk is absent when the detection frequency is equal to or greater than a predetermined frequency threshold value based on the frequency information, and
the frequency threshold value is set to a smaller value as the brightness indicated by the brightness information is higher.

8. A vehicle (V) comprising:
an approach recording unit (11) configured to execute a parking approach recording function of recording an image of surroundings of the vehicle (V) being parked when an object approaches a vicinity of the vehicle (V);
an acquisition unit (12) configured to acquire surrounding environment information of the vehicle (V); and
a function control unit (13) configured to turn off the parking approach recording function of the approach recording unit (11) based on the surrounding environment information acquired by the acquisition unit (12).

9. An image recording method performed in an image recording device (100) configured to execute a parking approach recording function of recording an image of surroundings of a vehicle (V) being parked when an object approaches a vicinity of the vehicle (V), the image recording method comprising:
executing the parking approach recording function;
acquiring surrounding environment information of the vehicle (V); and
turning off the parking approach recording function executed in the step of executing the parking approach recording function, based on the surrounding environment information acquired in the step of acquiring surrounding environment information.

10. A program for operating an image recording device (100) configured to execute a parking approach recording function of recording an image of surroundings of a vehicle (V) being parked when an object approaches a vicinity of the vehicle (V), the program causing the image recording device (100) to perform:
executing the parking approach recording function;
acquiring surrounding environment information of the vehicle (V); and
turning off the parking approach recording function based on the acquired surrounding environment information.
